# EUROPEAN PATENT SPECIFICATION

(11) **EP 2 276 815 B1**
(45) Date of publication and mention of the grant of the patent: **27.12.2017**
(21) Application number: 09745803.8
(22) Date of filing: 14.05.2009
(51) Int. Cl.: B05D 5/08, C09D 7/12, F16B 1/00, C08K 3/22, B05D 5/00, B05D 7/00

(54) **PROCESS FOR REDUCTION OF FRICTION**
VERFAHREN ZUR REIBUNGSREDUZIERUNG
PROCÉDÉ POUR LA RÉDUCTION DU FROTTEMENT

(30) Priority: 14.05.2008 GB 0808685
(43) Date of publication of application: 26.01.2011
(73) Proprietor: Dow Corning Corporation, Midland, Michigan 48686-0994 (US)
(72) Inventor: BARTH, Marita, 65091 Wiesbaden (DE); CLERICI, Vittorio, 65375 Oestrich-Winkel (DE)
(74) Representative: Donlan, Andrew Michael
(86) International application number: PCT/EP2009/055860
(87) International publication number: WO 2009/138471

(56) References cited:
- EP-A2- 0 504 522
- WO-A1-03/044099
- WO-A1-2006/008120
- US-A1- 2003 213 698

## Description

This invention relates to a process for reduction of friction by the provision of a certain anti-friction coating composition on a surface. Anti-friction coating compositions are well known in the art to provide high performance dry film lubricants offering maintenance-free permanent lubrication under working conditions which conventional lubricants (such as mineral-oil and synthetic greases) cannot withstand. Typical applications for anti-friction coatings include dry permanent lubrication of bolts, hinges, lock parts, magnets and engine and gear parts.

Anti-friction coating compositions are typically dispersions of solid lubricants in resins and solvents. For example EP-A-976795 describes an anti-friction coating composition which comprises a lubricant, a corrosion inhibitor and a solvent, wherein the lubricant comprises a mixture of polyolefin wax with phenolic resin, epoxy resin and polyvinylbutyral resin.

Anti-friction coatings may contain a corrosion inhibitor and/or may be applied over an anticorrosion coating. WO-A-02/088262 describes a coating composition which comprises a silicate and an organic titanate binder and aluminium particles and zinc particles as corrosion inhibitor in a solvent. This anti-corrosion coating can be overcoated with an anti-friction coating comprising a lubricant mixture of phenolic resin, epoxy resin, vinyl butyral resin and polytetrafluoroethylene in a solvent, or with a metal particle free top-coat comprising a silicate and an organic titanate. EP0504522 relates to a biaxially orientated polyester film having an improved friction coefficient comprising a coating on at least one surface of the film. The coating is made from water soluble or water dispersed resin compounds which are mixed with additives. WO03044099 discloses a coating material containing 10-80% nanoparticles or agglomerates thereof, an organic binding agent and optional additives. WO2006008120 discloses an aqueous binder dispersion nanoscale polymer particles made of organic binders which contain nanoparticles as a highly dispersed phase, as well as water and/or an aqueous colloid metal oxide solution as continuous phase.

US-A-2002/0192511 describes dispersing a functional material in a liquid containing a dissolved phosphate, coating the dispersion on a substrate and heating to convert the coating into a functional coating in which the functional material is integrated into an inorganic matrix phase. The functional material can for example be silicon, ZrO₂, Al₂O₃, SiO₂, TiO₂, TiN, polytetrafluoroethylene, polyethylene, polyamide, boron nitride, silicon nitride, MoS₂, MoSi₂ or chromium oxide.

US-A-2003/0213698 describes a lubricating treating process for an Al or Al alloy material which includes the anodising of the material and the forming of a lubrication coating including a polyester resin (30 to 70 mass parts), a particulate PTFE (30 to 70 mass parts) and ceramic (alumina) particles (0.5 to 5 mass parts), and 2 to 20 µm thick, to thereby impart excellent resistance to adhesion and seizure and a low friction to the Al or Al alloy material. The ceramic particles are described as being preferably alumina particles having an average particle size of 0.001 to 0.2 µm.

US-A-2003/0097945 describes a paper feed roller made of plastic and having a ceramic coating on the surface of the roller. The ceramic coating comprises Al₂O₃, SiO₂, ZrO₂, SiC, TiC, TaC, B₄C, Cr₂C₂, Si₃N₄, BiN, TiN, AIN, TiB₂, ZrB₂, TiO₂ or MgF₂. The coating is formed by jetting a processing gas including ceramic particles onto the surface of the plastic roller.

US-A-2007/0099027 describes a wear resistant coating comprising a hard backing having thin layers disposed thereon. The hard backing comprises a metal alloy matrix with hard particles dispersed therein. The thin layers have different characteristics from one another. US-A-2005/121402 describes forming wear resistant coatings by applying hard metal oxides, carbides, nitrides or borides to a metal or alloy surface at a pressure of 400 to 5000 MPa. The procedure can be repeated with decreasing grain size of the hard metal oxides, carbides, nitrides or borides.

A paper by M. Kautt entitled 'Contribution of nanotechnology to the increased performance and expansion of applications of microsystems in Galvanotech 4/2004 describes the use of nanoparticles (particles of size below 100nm) in micro-electronic technology. A paper by F. Haupert and B. Wetzel entitled 'Production and structure property relationship of nanoparticle-reinforced plastics and their effect on the tribological behaviour' presented at the Technische Akademie Esslingen during the 15th International Colloqium on Tribology "Automotive and Industrial Lubrication" in January 2006 describes the use of alumina nanoparticles to reinforce epoxy thermoplastics and evaluates the reinforced thermoplastics under the tribological aspect.

In a first aspect of the invention, there is provided a process for reduction of friction of a surface comprising the application to the surface of a coating composition comprising particles in a resin binder, characterised in that the particles are ceramic particles having a bimodal particle size distribution prepared from agglomerated Al₂O₃ nanoparticles by shearing in a high shear mixer operating for example at 6000 to 15000 rpm in which 15 to 75% by volume of the particles have a particle size, measured by a laser scattering particle size distribution analyser, in the range 10 to 250nm and 25 to 85% by volume of the particles have a particle size, measured by a laser scattering particle size distribution analyser, in the range 3 to 25µm, at least 90% by volume of the ceramic particles having particle size measured by a laser scattering particle size distribution analyser, in the stated ranges.

It is preferred that in the process for reducing friction and wear of a surface the anti-friction coating composition is applied in order to obtain a dry thickness of from 1 to 20µm.

The invention also includes in yet another aspect the use of a coating comprising ceramic particles having a bimodal particle size distribution in which 15 to 75% by volume of the particles have a particle size in the range 10 to 250nm and 25 to 85% by volume of the particles have a particle size in the range 3 to 25µm, at least 90% by volume of the ceramic particles having particle size in the stated ranges, in a resin binder to reduce friction and wear of a surface.

In US-A-2006/0147674 there is described a UV curable composition used as a protective film for display devices for optical application, which are based on a resin mixture with ZrO2 and/or silica nanoparticles in a bimodal distribution for particle size. However there is no mention of any friction benefits.

The ceramic particles present in the composition used in the process or use of the invention are hard inorganic particles which tend to be insoluble in most solvents. Ceramic particles are generally ceramic oxide particles, particularly alumina (Al₂O₃) particles. Other ceramic oxide particles include ZrO₂, SiO₂, and TiO₂ particles. Ceramic particles may alternatively be nitride, carbide or boride particles, for example boron nitride, silicon nitride or silicon carbide particles. Mixtures of two or more different ceramic particles may also be utilised.

The average primary particle size of the ceramic particles is preferably in the range 1 to 100nm, more preferably at least 5nm. Particularly preferred particles are alumina particles of average primary particle size from 10 to 30 or 50nm. They include for example, Degussa AG's 'Al₂O₃ nanoparticles' which have an average primary particle size 18nm and are available under the trade name "Aeroxide". However such fine particles tend to agglomerate, resulting in the fact that we have found that the measured particle size of these 'Al₂O₃ nanoparticles' as supplied to be about 11.5µm. Such agglomerated particles are found to be useful in anti-friction coatings to be used in a process or use according to the invention, particularly if the average primary particle size is below 200nm.

We have found that ceramic particles having a bimodal particle size distribution are particularly effective in reducing friction and wear of a surface when used in anti-friction coatings according to the invention. The particle size distribution is preferably such that 15 to 75% by volume of the particles have a particle size in the range 10 to 250nm, more preferably below 200nm, most preferably from 50 to 200nm, and 25 to 85% by volume of the particles have a particle size in the range 3 to 25µm, more preferably 5 to 15µm. At least 90% by volume, more preferably at least 95%, of the ceramic particles have particle size in the stated ranges. Most preferably 30 to 50% by volume of the particles have a particle size in the range 50 to 200nm and 70 to 50% by volume of the particles have a particle size in the range 5 to 15µm.

We have found that alumina particles having such a bimodal particle size distribution can be prepared from the agglomerated 'Al₂O₃ nanoparticles' described above by shearing in a high shear mixer operating for example at 6000 to 15000 rpm. Examples of such high shear mixers include Ultraturrax^{(TM)} T25 high shear mixers sold by IKA for use as a laboratory mixer and high shear mixers CMS-UTL^{(TM)} model sold by IKA for use as an industrial mixer. The alumina particles can for example be sheared in the presence of the resin binder and diluent, such as organic solvent, used in the anti-friction coating composition. We have found however that a ball mill, which generally operates at lower shear for longer time, does not tend to produce a bimodal particle size distribution. For example, a ball mill sold by Netzsch as particularly suitable for nano particles is indeed more effective in comminuting all the agglomerates in the 'Al₂O₃ nanoparticles' but does not produce a bimodal particle size distribution.

In the accompanying tables,
- Table 6 depicts the particle size distribution of 'Al₂O₃ nanoparticles' dispersed by low shear mixing in a solution of a mixture of phenol-formaldehyde resin, epoxy resin and silicone resin in a solvent mixture of n-butyl acetate and ethanol;
- Table 7 depicts the particle size distribution of the 'Al₂O₃ nanoparticles' dispersed in the same solution with high shear by a laboratory high shear mixer operating at 10000 rpm;
- Table 8 depicts the particle size distribution of the 'Al₂O₃ nanoparticles' dispersed in the same solution with high shear by an industrial scale high shear mixer operating at 9000 rpm:
- Table 9 depicts the particle size distribution of the 'Al₂O₃ nanoparticles' dispersed in the same solution with medium shear by a Netzsch^{(TM)} ball mill sold as particularly suitable for nanoparticles.

The particle size was measured by a laser scattering particle size distribution analyser. As seen in Table 6, the mean (agglomerate) particle size of the 'Al₂O₃ nanoparticles' supplied, treated with only low shear, was 11.5µm, with almost all the agglomerate particles being in the size range 5 to 30µm. As seen in Tables 7 and 8, the Al₂O₃ after shearing in either type of high shear mixer had a bimodal particle size distribution. 30-50% of the particles by volume had an average particle size of about 110nm and 70-50% had an average particle size of about 9.5µm. In both Tables 7 and 8, substantially all the particles had a size in the ranges 80-160nm and 3-20µm. The Al₂O₃ nanoparticles which had been sheared in the industrial scale high shear mixer had a higher proportion of particles of size 80-160nm compared to the Al₂O₃ nanoparticles which had been sheared in the laboratory mixer.

Substantially all the Al₂O₃ nanoparticles which had been sheared in the Netzsch ball mill had a particle size in the range 80 to 300nm, with a mean particle size of 160nm. The particle size distribution in Table 9 shows a single peak; there is no hint of bimodal particle size distribution.

The organic resin binder can in general be selected from any of those known in coating compositions. The binder may for example comprise at least one resin selected from phenolic resins, epoxy resins and silicone resin. Preferred phenolic resins include copolymers of phenol and formaldehyde and copolymers of phenol, formaldehyde and cresol. A preferred epoxy resin is a copolymer of bisphenol A and epichlorohydrin. Preferred silicone resins are branched organopolysiloxanes containing one or more siloxane units independently selected from (R₃SiO_{0.5} ), (R₂SiO), (RSiO_{1.5}), or (SiO₂) siloxane units, commonly referred to as M, D, T, and Q siloxane units respectively, where R may be any organic group containing 1 - 30 carbon atoms, preferably alkyl or aryl groups having up to 8 carbon atoms, more preferably methyl, ethyl or phenyl groups. In particular silicone resins comprising both D and T siloxane units are preferred. Alternatively the binder may be an acrylic resin, polyester resin, polyurethane, amino-formaldehyde resin, vinyl resin, for example polyvinyl butyral, or polyamideimide resin. Mixtures of two or more suitable resins may also be used, where they are compatible, although this is not preferred.

The coating composition is usually applied from solvent, that is the ceramic particles are dispersed in a solution of the organic resin binder in a liquid organic solvent. The solvent may for example be selected from water, alcohols (e.g. methanol, ethanol, propanol, butanol), ketones (e.g. acetone, methyl ethyl ketone, methyl butyl ketone, methyl isobutyl ketone, cyclohexanone), esters (e.g. butyl acetate), aromatic hydrocarbon solvents (e.g. toluene, xylene), aliphatic hydrocarbon solvents (e.g. white spirit), and heterocyclic solvents (e.g. N-methylpyrrolidone, N-ethylpyrrolidone or gamma-butyrolactone). The solvent may also contain a mixture of two or more different types of solvents. When the binder resin comprises phenolic resin, epoxy resin and/or silicone resin, alcohols and/or esters are particularly effective solvents. Alternatively, the coating composition may be applied from an aqueous or non-aqueous dispersion. The concentration of organic binder resin in the solution or dispersion may for example be in the range 10 to 50%, preferably 15 to 50% by weight.

The concentration of ceramic particles, for example alumina particles, in the coating composition can for example be 1 to 20%, preferably 1 to 10%, most preferably 1 to 5% by weight of the anti-friction coating composition according to the invention. This may be equivalent to 1 to 30%, respectively 1 to 15 and 1 to 8% by volume of the dry coating film.

The friction coefficient of substrates coated with a coating resulting from the anti-friction coating composition used in a process or use according to the invention against opposing surfaces such as plastics, metal or fabric surfaces is reduced, and the wear of the substrate surface is reduced, even when the coating contains no solid lubricant other than the ceramic nanoparticles. This is surprising, since the nanoparticles are known as reinforcing fillers for thermoplastics rather than as lubricants. The anti-friction coating compositions used in a process or use according to the invention can however also contain a solid lubricant to give further friction reduction. Such a solid lubricant can for example be a solid hydrocarbon wax such as a polyolefin wax, for example micronised polypropylene wax. The solid lubricant can alternatively be a fluoropolymer such as polytetrafluoroethylene (PTFE), a mixture of PTFE and wax, molybdenum disulphide, graphite, zinc sulfide or tricalcium phosphate or any combination of two or more of these. The solid lubricant, if used, may be present at up to 50% by weight of the total coating composition, for example 1 to 40% by weight, particularly 1 to 25%. This may be equivalent to and result in 1 to 50% by volume of the dry coating film when applied. The incorporation of the ceramic nanoparticles in an anti-friction coating can increase the hardness, scratch resistance and impact resistance of the anti-friction coating without impairing the elasticity and flexibility characteristics of the formulated coating or the friction coefficient.

The coating composition used in a process or use according to the invention is generally applied to a substrate in an amount to give a coating thickness of 1 to 20µm when dry. The coating thickness is preferably greater than the surface roughness of the substrate and may thus preferably be 5 to 20µm. The coating can be applied by any coating means, for example spraying, including aerosol spray, airless spray, electrostatic spraying or a spraying drum, or by brush, by roller, by coil coating, by dipping or by dip-spinning. The coating may be achieved by applying a single coat or a plurality of coats of the anti-friction coating composition according to the invention, for example using 2 or 3 coating steps. When applied, the coating composition may be heated to aid the evaporation of the solvent. It may be further heated, for example at 100 to 200°C, to cure the coating if the organic binder resin comprises a heat curable resin, for example an epoxy resin, phenolic resin, and/or silicone resin.

Examples of substrates which can be coated in a process or use according to the invention include automotive components, for example nuts, bolts and other fasteners, door, bonnet and boot lock parts, hinges, door stoppers, window guides, seat and seat belt components, brake rotors and drums, and other transportation industry related parts. The preferred substrate is a metal substrate and may, if desired, first be given an anticorrosive treatment, for example it may be phosphated and/or coated with a corrosion inhibiting coating.

Thus in one preferred process according to the invention a metal surface is coated with a corrosion inhibiting coating and subsequently coated with an anti-friction coating composition comprising an organic resin binder containing ceramic particles of weight average primary particle size below 100nm. The corrosion inhibiting coating may for example comprise metal particles, such as zinc and/or aluminium particles, for example in a silicate or organic titanate binder, as described in WO-A-02/088262. Such corrosion inhibiting coatings are generally over-pigmented with zinc particles (they have a pigment volume concentration above the critical pigment volume concentration) to give the most effective corrosion protection, but such a high concentration of metal particles tends to lead to surface roughness and thus a high friction coefficient, and also poor internal cohesion giving a rather brittle coating. The anti-friction coating resulting from the application of a coating composition in a process or use according to the invention is well suited to reduce the coefficient of friction of such corrosion inhibited coated surfaces and to increase the scratch, impact, transport and internal cohesion resistance of the coated article without impairing the corrosion resistance of the corrosion inhibiting coating. The anti-friction coatings provided by a process according to the invention and containing ceramic, e.g. alumina, particles of bimodal particle size distribution are particularly effective in protecting the corrosion inhibiting coating from damage, as shown by cross-cut tests and bending tests. Alternative types of corrosion inhibiting coatings include galvanic plating layers and hot dip galvanized layers, and the anti-friction coatings provided by the process according to the invention are suitable for overcoating these corrosion inhibiting coatings.

The invention is illustrated by the following Examples, in which all parts and percentages are by weight unless otherwise specified.

### COMPARATIVE EXAMPLE C1

The coating composition of this Example comprised a solution of resin binder without any solid lubricant. The solution comprised 22% by weight of a mixture of phenol-formaldehyde resin, bisphenol A epichlorohydrin epoxy resin and silicone DT resin in a ratio of about 3:1:1 in 78% of a solvent mixture of methyl ethyl ketone, n-butyl acetate and ethanol.

### EXAMPLES 1 TO 5 AND COMPARATIVE EXAMPLES C2 AND C3

In these Examples the following ingredients were used in the amounts shown in Table 1, dispersed in the resin binder solution of Comparative Example C1 which formed the remainder of each coating composition up to 100%.
- Nano Al₂O₃ - 'Al₂O₃ nanoparticles' of average primary particle size 18nm but agglomerate size about 11.5µm sold by Degussa AG under the trade name "Aeroxide". The 'Al₂O₃ nanoparticles' were mixed with the resin solution in a laboratory high shear mixer at 10000rpm to produce Al₂O₃ of bimodal particle size distribution as shown in Table 7.
- Solid lubricant wax - micronised polypropylene wax
- Black dye - carbon black dye in solvents compatible with the resin solution

### COMPARATIVE EXAMPLE C4

Comparative Example C4 is an anti-friction coating sold commercially by Dow Corning under the Registered Trade Mark 'Molykote D708'.

Each anti-friction coating composition as described in Examples 1 to 5 and Comparative Examples C1 to C4 was sprayed onto a 0.8mm thick steel plate, allowed to dry and heat cured at 200°C for 20 minutes to give a 10 to 12µm thick coating. The coefficient of friction against acetal polyoxymethylene (POM) was measured in a Polytester^{(TM)} in which a ball of POM oscillates over the coated steel surface under an applied load. The loads applied were 2N and 5N. The coefficients of friction (COF) measured are shown in Table 1. For some Examples and Comparative Examples, the coefficient of friction of the coated steel plate was also measured against a woven polyester (PET) fabric which was wrapped around a roller and oscillated against the coated plate in the Polytester. The coefficients of friction against PET fabric are also shown in Table 1.

**TABLE 1**

| Example | Nano Al2O3 % weight | Solid lubricant wax % weight | Black dye % weight | COF POM ball 2N | COF POM ball 5N | COF PET fabric 2N | COF PET fabric 5N |
|---|---|---|---|---|---|---|---|
| C1 | 0 | 0 | 0 | 0.262 | 0.300 | | |
| 1 | 4.9 | 0 | 0 | 0.076 | 0.091 | | |
| 2 | 1.5 | 0 | 1.5 | 0.099 | 0.104 | | |
| 3 | 1.5 | 1.0 | 1.5 | 0.102 | 0.108 | 0.087 | 0.092 |
| 4 | 1.5 | 1.8 | 1.5 | 0.087 | 0.085 | 0.086 | 0.084 |
| 5 | 1.5 | 2.8 | 1.5 | 0.087 | 0.086 | 0.095 | 0.094 |
| C2 | 0 | 6.3 | 0 | 0.108 | 0.105 | | |
| C3 | 0 | 1.9 | 1.5 | 0.155 | 0.144 | 0.136 | 0.135 |
| C4 | 0 | (PTFE) | Yes | 0.097 | 0.097 | 0.104 | 0.091 |

The results of Examples 1 and 2 compared with Example C1 show that the presence of the nanoparticles in the coating, that is the alumina particles of bimodal particle size distribution, gives a marked reduction in the coefficient of friction. The results of Example 1 compared to Example C2 show that the incorporation of 4.9% nanoparticles gave a much greater reduction in coefficient of friction than 6.3% solid lubricant wax. Indeed, Example 1 gave a lower coefficient of friction than the commercial anti-friction coating used in Example C4. The results of Example 2 compared to Example C3 show that the incorporation of 1.5% nanoparticles gave a much greater reduction in coefficient of friction than 1.9% solid lubricant wax.

The results of Examples 4 and 5 show that incorporation of nanoparticles and solid lubricant wax can give a significantly lower coefficient of friction than the commercial anti-friction coating containing PTFE used in Example C4.

### EXAMPLES 6 TO 10 AND COMPARATIVE EXAMPLE C5

In these Examples the 'Al₂O₃ nanoparticles' together with a solid lubricant mixture of PTFE and micronised polypropylene wax in weight ratio about 1:1 and/or a silver dye sold under the Trade Mark Stapa Hydrolan were used in the amounts shown in Table 2, and were dispersed in the resin solution of Comparative Example C1 which formed the remainder of each anti-friction coating composition up to 100%. The 'Al₂O₃ nanoparticles' were mixed with the resin solution in an industrial high shear mixer at 9000rpm to produce Al₂O₃ of bimodal particle size distribution. Comparative Example C5 is an anti-friction top coat sold commercially by Doerken under the Trade name 'Delta Protekt VH301 GZ'

### CROSS-CUT AND BENDING TESTS

Steel plates were coated with the corrosion resistant coating of Example 1 of WO-A-02/088262 at two different film thicknesses of 8µm and 14µm. Each of these coated plates was overcoated with the anti-friction coating composition of each of Examples 6 to 10 according to the invention. After coating the composition, the resulting anti-friction coating was allowed to dry and was heat cured at 200°C for 20 minutes to give a 6µm thick coating. Each coated panel was then subjected to a cross-cut test according to ASTM D-3359. In this test, a standard cutting device (with 1mm or 2mm distance between the cutting edges) makes several scratches at 90° to each other with enough pressure to reach the metal substrate. A standard adhesive film is applied to the scratched area and then abruptly removed. The results are shown in Table 2.

Plates coated with the corrosion resistant coating of Example 1 of WO-A-02/088262 at 8µm and 14µm and overcoated with each of the anti-friction coatings resulting from Examples 6 to 10 according to the invention were also subjected to a bending test according to ASTM D-1737. In this test, the coated plate is bent at 180° around a cylindrical mandrel. Coating systems which do not have good elasticity crack in the bent area. The results are also shown in Table 2.

**TABLE 2**

| Example | Nano Al2O3 % weight. | Solid lubricant: mixture % weight | Silver dye % weight | ASTM D-3359 Cross-cut 1mm blade [% area removed] | ASTM D-3359 Cross-cut 2mm blade [% area removed] | ASTM D-1737 Bending test 5mm diameter cylindrical mandrel |
|---|---|---|---|---|---|---|
| C1 | 0 | 0 | 0 | 5B - [0] | 5B - [0] | No cracks |
| 6 | 4.5 | 0 | 3.0 | 5B - [0] | 5B - [0] | No cracks |
| 7 | 4.4 | 4.1 | 2.8 | 5B - [0] | 5B - [0] | No cracks |
| 8 | 4.1 | 9.4 | 2.7 | 5B - [0] | 5B - [0] | No cracks |
| 9 | 4.4 | 5.8 | 0 | 5B - [0] | 5B - [0] | No cracks |
| 10 | 4.2 | 10.6 | 0 | 5B - [0] | 5B - [0] | No cracks |
| C4 | 0 | (PTFE) | Yes (black dye) | 0B - [> 65] | 0B - [> 65] | Complete peeling |
| C5 | 0 | (PTFE) | Yes | 0B - [>65] | 0B - [>65] | Complete peeling |

The plates overcoated with the anti-friction coating compositions of Examples 6 to 10 showed very good resistance in the cross-cut test, with very little removal of the coating when the adhesive film was removed. By comparison, plates overcoated with the commercial anti-friction coatings of Example C4 or C5 showed much more removal of the coating (corrosion inhibiting coating and top coat) when the adhesive film was removed

The plates overcoated with the anti-friction coating compositions of Examples 6 to 10 showed very good elasticity, whereas plates overcoated with the commercial anti-friction coatings of Example C4 or C5 showed more cracking at the bend.

### SALT SPRAY TEST

Steel bolts were coated with the corrosion resistant coating of Example 1 of WO-A-02/088262 as base coat and with various top coats as described in Table 2. The coated bolts were subjected to a salt spray test according to DIN 50021, in which the bolts were held in a chamber in which a 5% aqueous salt solution is sprayed. The length of time in hours until red rust formation was noted for each test and recorded in Table 3.

**TABLE 3**

| Top Coat | Base coat µm | Top coat µm | Hours to rust |
|---|---|---|---|
| None | 8 | 0 | 300 |
| C1 | 10 | 5 | 650 |
| Example 7 | 8 | 5 | 550 |
| Example 9 | 8 | 5 | 600 |
| C4 | 9 | 7 | 400 |

The anti-friction coatings resulting from the compositions of Examples 7 and 9 according to the invention protected the corrosion resistant coating so that the salt spray resistance was better than the corrosion resistant coating used alone or with the anti-friction coating of Example C4. As a comparison, a commercial coating system of corrosion resistant coating and anti-friction top coat sold under the Trade Mark 'Geomet' showed about 400 hours to red rust formation in the salt spray test.

### LUBRICATION TEST

The wear resistance and the coefficient of friction (COF) of the anti-friction coatings resulting from compositions of Examples 7 to 10 according to the invention were measured according to DIN 51834. Cylindrical flat test pieces were coated with various top coats as described in Table 4. For each coating, a spherical steel specimen of 16mm radius was oscillated against the coated cylindrical specimen under an increasing load as specified in DIN 51834, load carrying capacity method, at 40°C and 40% relative humidity (RH)until a sudden increase of the coefficient of friction was recorded, indicating seizure of the coating. The time in minutes to reach seizure, and the COF before seizure, are recorded in Table 4. In Comparative Examples 4 to 6, the following commercial coatings were subjected to the DIN 51834 test:
- Comparative Example C4 is an anti-friction coating sold commercially by Dow Corning under the Trade mark 'Molykote® D708';
- Comparative Example C5 is an anti-friction top coat sold commercially by Doerken under the Trade name 'Delta Protekt VH301 GZ'.
- Comparative Example C6 is an anti-friction top coat sold commercially by Whitford under the Trade name "Xylan 5230".

**TABLE 4 - CONDITIONS: 40°C AND 40 % RH**

| Example | Time to seizure [min] | COF |
|---|---|---|
| 7 | 26 | 0.07 |
| 8 | 65 | 0.07 |
| 9 | 75 | 0.07 |
| 10 | 80 | 0.07 |
| C4 | 22 | 0.2 |
| C5 | 22 | 0.28 |
| C6 | 1 | Very high value |

The coatings resulting from the invention clearly show improved endurance under a continuous increasing load, and therefore improved load carrying capacity, and a consistently lower coefficient of friction.

The test pieces coated with the anti-friction coatings of Examples 7, 9 and 10 were also subjected to the DIN 51834 test (load carrying capacity method) at 80°C and 90 % RH. The results are shown in Table 5 below.

**TABLE 5 - CONDITIONS: 80°C AND 90 % RH**

| Example | Time to seizure [min] | COF |
|---|---|---|
| 7 | 35 | 0.07 |
| 9 | 73 | 0.06 |
| 10 | > 180 | 0.06 |

### COMPARATIVE EXAMPLE C7

Example 6 was repeated with the difference that the 'Al₂O₃ nanoparticles' were mixed with the resin solution in a Netzsch ball mill to produce Al₂O₃ of normal particle size distribution and mean particle diameter 160nm as shown in Table 9.

The performance of the Comparative Example C7 coating in the cross-cut and bending tests was not as good as that of the coatings resulting from Examples 6 to 10. In the cross-cut test according to ASTM D-3359, the plate overcoated with the Comparative Example C7 coating composition was more fragile than the plates overcoated with the coatings of Examples 6 to 10. There was removal of the coating (corrosion inhibiting coating and top coat) when the adhesive film was removed, to a similar extent to the plates coated with the Example C4 and Example C5 systems. In the bending test according to ASTM D-1737, the plate overcoated with the Comparative Example C7 coating composition showed more cracking than the plates overcoated with the anti-friction coatings resulting from Examples 6 to 10, indicating that the Comparative Example C7 coating had less flexibility. The extent of cracking of the plate overcoated with the Comparative Example C7 coating composition was similar to that of the plates coated with the Example C4 and Example C5 systems.

**TABLE 6 PARTICLE SIZE DISTRIBUTION OF 'AL₂O₃ NANOPARTICLES'**

| Diameter (µm) | Percentage by Volume | Cumulative percentage |
|---|---|---|
| 7 | 1.5 | 1.5 |
| 8 | 6 | 7.5 |
| 9 | 16 | 23.5 |
| 10 | 29 | 52.5 |
| 11 | 26 | 78.5 |
| 12 | 14 | 92.5 |
| 13 | 5 | 97.5 |
| 14 | 2 | 99.5 |
| 15 | 0.5 | 100 |

**TABLE 7 PARTICLE SIZE DISTRIBUTION OF 'AL₂O₃ NANOPARTICLES'**

| Diameter (µm) | Percentage by volume | Cumulative percentage |
|---|---|---|
| 0.07 | 1 | 1 |
| 0.08 | 3.5 | 4.5 |
| 0.09 | 9 | 13.5 |
| 0.10 | 14 | 27.5 |
| 0.11 | 12 | 39.5 |
| 0.12 | 5.5 | 45 |
| 0.13 | 1.5 | 46.5 |
| 0.14 | 0.5 | 47 |
| 5 | 0.5 | 47.5 |
| 6 | 1 | 48.5 |
| 7 | 3.5 | 52 |
| 8 | 8 | 60 |
| 9 | 10.5 | 70.5 |
| 10 | 11 | 81.5 |
| 11 | 9.5 | 91 |
| 12 | 6 | 97 |
| 13 | 2 | 99 |
| 14 | 1 | 100 |

**TABLE 8 PARTICLE SIZE DISTRIBUTION OF 'AL₂O₃ NANOPARTICLES'**

| Diameter (µm) | Percentage by volume | Cumulative percentage |
|---|---|---|
| 0.07 | 1 | 1 |
| 0.08 | 4 | 5 |
| 0.09 | 10.5 | 15.5 |
| 0.10 | 15.5 | 31 |
| 0.11 | 13 | 44 |
| 0.12 | 7 | 51 |
| 0.13 | 2 | 53 |
| 0.14 | 0.5 | 53.5 |
| 3 | 0.5 | 54 |
| 4 | 1.5 | 55.5 |
| 5 | 4 | 59.5 |
| 6 | 7 | 66.5 |
| 7 | 10 | 76.5 |
| 8 | 10 | 86.5 |
| 9 | 7 | 93.5 |
| 10 | 4 | 97.5 |
| 11 | 2 | 99.5 |
| 12 | 0.5 | 100 |

**TABLE 9 PARTICLE SIZE DISTRIBUTION OF 'AL₂O₃ NANOPARTICLES'**

| Diameter (µm) | Percentage by volume | Cumulative percentage |
|---|---|---|
| 0.8 | 1 | 1 |
| 0.9 | 2 | 3 |
| 1 | 4 | 7 |
| 1.1 | 10 | 17 |
| 1.2 | 20 | 37 |
| 1.3 | 26 | 63 |
| 1.4 | 21 | 84 |
| 1.5 | 11 | 95 |
| 1.6 | 4 | 99 |
| 1.7 | 1 | 100 |

## Claims

1. A process for reduction of friction of a surface comprising the application to the surface of a coating composition comprising particles in a resin binder, **characterised in that** the particles are ceramic particles having a bimodal particle size distribution prepared from agglomerated Al₂O₃ nanoparticles by shearing in a high shear mixer operating for example at 6000 to 15000 rpm in which 15 to 75% by volume of the particles have a particle size, measured by a laser scattering particle size distribution analyser, in the range 10 to 250nm and 25 to 85% by volume of the particles have a particle size, measured by a laser scattering particle size distribution analyser, in the range 3 to 25µm, at least 90% by volume of the ceramic particles having particle size measured by a laser scattering particle size distribution analyser, in the stated ranges.

2. A process according to Claim 1, **characterised in that** the particles having a particle size in the range 3 to 25 µm are agglomerate particles having a primary particle size, measured by a laser scattering particle size distribution analyser, of below 200nm.

3. A process according to any preceding claim, **characterised in that** the particles of bimodal particle size distribution are derived by high shear mixing from agglomerate particles having a particle size measured by a laser scattering particle size distribution analyser, in the range 3 to 25µm.

4. A process according to any of the preceding claims, **characterised in that** the ceramic particles are dispersed in a solution or emulsion of the resin binder in a liquid.

5. A process according to any of the preceding claims, **characterised in that** the concentration of ceramic particles in the coating composition is 1 to 20% by weight.

6. A process according to any of the preceding claims, **characterised in that** the binder comprises at least one resin selected from phenolic resins, epoxy resins and silicone resins.

7. A process according to any of the preceding claims, **characterised in that** the coating composition also contains a solid lubricant material selected from a solid hydrocarbon wax, a fluoropolymer, a mixture of PTFE and wax, molybdenum disulphide, graphite, zinc sulfide or tricalcium phosphate or any combination of two or more of these.

8. A process according to Claim 7, **characterised in that** the solid lubricant material comprises a wax and/or polytetrafluoroethylene.

9. A process according to Claim 8, **characterized in that** the coating composition contains 1 to 40% by weight solid wax and/or polytetrafluoroethylene.

10. A process according to any of Claims 1 to 6, **characterised in that** the coating composition contains no solid lubricant material other than the ceramic particles.

11. A process according to any of the preceding claims, **characterised in that** the surface which is coated is a metal surface precoated with a corrosion inhibiting coating.

12. A process according to Claim 11, **characterised in that** the corrosion inhibiting coating comprises metal particles.

13. A process according to claim 11 or 12 for coating a metal surface comprising coating the surface with a corrosion inhibiting coating comprising aluminium particles and/or zinc particles in a silicate or organic titanate binder, and overcoating according to a process according to any of Claims 1 to 10.

14. Use of a coating comprising ceramic particles having a bimodal particle size distribution, prepared from agglomerated Al₂O₃ nanoparticles by shearing in a high shear mixer operating for example at 6000 to 15000 rpm, in which 15 to 75% by volume of the particles have a particle size, measured by a laser scattering particle size distribution analyser, in the range 10 to 250nm and 25 to 85% by volume of the particles have a particle size in the range 3 to 25µm, at least 90% by volume of the ceramic particles having particle size in the stated ranges, in a resin binder to reduce friction and wear of a surface.

## Patentansprüche

1. Verfahren zum Reduzieren von Reibung einer Oberfläche, das das Aufbringen einer Beschichtungszusammensetzung, die Partikel in einem Harzbindemittel umfasst, auf die Oberfläche beinhaltet, **dadurch gekennzeichnet, dass** die Partikel Keramikpartikel mit einer bimodalen Partikelgrößenverteilung sind, hergestellt von agglomerierten Al₂O₃ Nanopartikeln durch Scheren in einem Hochschermischer, der zum Beispiel bei 6000 bis 15.000 rpm arbeitet, wobei 15 bis 75 Vol.-% der Partikel eine Partikelgröße, gemessen mit einem Laserstreuungs-Partikelgrößenverteilungsanalysator, im Bereich von 10 bis 250 nm und 25 bis 85 Vol.-% der Partikel eine Partikelgröße, gemessen mit einem Laserstreuungs-Partikelgrößenverteilungsanalysator, im Bereich von 3 bis 25 µm haben, wobei wenigstens 90 Vol.-% der Keramikpartikel eine Partikelgröße, gemessen mit einem Laserstreuungs-Partikelgrößenverteilungsanalysator, in den angegebenen Bereichen haben.

2. Verfahren nach Anspruch 1, **dadurch gekennzeichnet, dass** die Partikel mit einer Partikelgröße im Bereich von 3 bis 25 µm Agglomeratpartikel mit einer primären Partikelgröße, gemessen mit einem Laserstreuungs-Partikelgrößenverteilungsanalysator, unter 200 nm sind.

3. Verfahren nach einem vorherigen Anspruch, **dadurch gekennzeichnet, dass** die Partikel von bimodaler Partikelgrößenverteilung durch Hochschermischen von Agglomeratpartikeln mit einer Partikelgröße, gemessen mit einem Laserstreuungs-Partikelgrößenverteilungsanalysator, im Bereich von 3 bis 25 µm abgeleitet sind.

4. Verfahren nach einem der vorherigen Ansprüche, **dadurch gekennzeichnet, dass** die Keramikpartikel in einer Lösung oder Emulsion des Harzbindemittels in einer Flüssigkeit dispergiert sind.

5. Verfahren nach einem der vorherigen Ansprüche, **dadurch gekennzeichnet, dass** die Konzentration von Keramikpartikeln in der Beschichtungszusammensetzung 1 bis 20 Gew.-% beträgt.

6. Verfahren nach einem der vorherigen Ansprüche, **dadurch gekennzeichnet, dass** das Bindemittel wenigstens ein Harz umfasst, ausgewählt aus Phenolharzen, Epoxidharzen und Silikonharzen.

7. Verfahren nach einem der vorherigen Ansprüche, **dadurch gekennzeichnet, dass** die Beschichtungszusammensetzung auch ein festes Schmiermaterial enthält, ausgewählt aus einem festen Kohlenwasserstoffwachs, einem Fluorpolymer, einem Gemisch aus PTFE und Wachs, Molybdändisulphid, Graphit, Zinksulfid oder Tricalciumphosphat oder einer beliebigen Kombination von zwei oder mehr davon.

8. Verfahren nach Anspruch 7, **dadurch gekennzeichnet, dass** das feste Schmiermaterial einen Wachs und/oder Polytetrafluorethylen umfasst.

9. Verfahren nach Anspruch 8, **dadurch gekennzeichnet, dass** die Beschichtungszusammensetzung 1 bis 40 Gew.-% festen Wachs und/oder Polytetrafluorethylen enthält.

10. Verfahren nach einem der Ansprüche 1 bis 6, **dadurch gekennzeichnet, dass** die Beschichtungszusammensetzung kein anderes festes Schmiermaterial als die Keramikpartikel enthält.

11. Verfahren nach einem der vorherigen Ansprüche, **dadurch gekennzeichnet, dass** die Oberfläche, die beschichtet wird, eine mit einer Korrosionsschutzbeschichtung vorbeschichtete Metalloberfläche ist.

12. Verfahren nach Anspruch 11, **dadurch gekennzeichnet, dass** die Korrosionsschutzbeschichtung Metallpartikel umfasst.

13. Verfahren nach Anspruch 11 oder 12 zum Beschichten einer Metalloberfläche, das das Beschichten der Oberfläche mit einer Korrosionsschutzbeschichtung umfasst, die Aluminiumpartikel und/oder Zinkpartikel in einem Silicat- oder organischen Titanatbindemittel enthält, und Überschichten mit einem Verfahren nach einem der Ansprüche 1 bis 10.

14. Verwendung einer Beschichtung, die Keramikpartikel mit einer bimodalen Partikelgrößenverteilung umfasst, hergestellt von agglomerierten Al₂O₃ Nanopartikeln durch Scheren in einem Hochschermischer, der zum Beispiel mit 6000 bis 15.000 rpm arbeitet, wobei 15 bis 75 Vol.-% der Partikel eine Partikelgröße, gemessen mit einem Laserstreuungs-Partikelgrößenverteilungsanalysator, im Bereich von 10 bis 250 nm und 25 bis 85 Vol.-% der Partikel eine Partikelgröße im Bereich von 3 bis 25 µm, wobei wenigstens 90 Vol.-% der Keramikpartikel eine Partikelgröße in den angegebenen Bereichen haben, in einem Harzbindemittel haben, um Reibung und Abnutzung einer Oberfläche zu reduzieren.

## Revendications

1. Processus pour la réduction du frottement d'une surface comprenant l'application sur la surface d'une composition de revêtement comprenant des particules dans un liant de résine, **caractérisé en ce que** les particules sont des particules de céramique possédant une distribution bimodale de la dimension des particules préparées à partir de nanoparticules d'Al₂O₃ agglomérées par cisaillement dans un malaxeur à fort cisaillement fonctionnant par exemple entre 6 000 et 15 000 rpm dans lequel de 15 à 75 % en volume des particules possèdent une dimension de particule, mesurée à l'aide d'un analyseur de distribution de la dimension des particules par diffusion laser, dans la plage allant de 10 à 250 nm et entre 25 et 80 % en volume des particules possède une dimension de particule, mesurée à l'aide d'un analyseur de distribution de la dimension des particules par diffusion laser, dans la plage allant de 3 à 25 µm, au moins 90 % en volume des particules de céramique possédant une dimension de particule mesurée à l'aide d'un analyseur de distribution de la dimension des particules par diffusion laser, dans les plages indiquées.

2. Processus selon la revendication 1, **caractérisé en ce que** les particules possédant une dimension de particule dans la plage allant de 3 à 25 µm sont des agglomérats particulaires possédant une dimension de particule primaire, mesurée à l'aide d'un analyseur de distribution de la dimension des particules par diffusion laser, inférieure à 200 nm.

3. Processus selon l'une quelconque des revendications précédentes, **caractérisé en ce que** les particules de distribution bimodale de la dimension des particules sont dérivées à l'aide d'un malaxeur à fort cisaillement à partir d'agglomérats particulaires possédant une dimension de particule mesurée à l'aide d'un analyseur de distribution de la dimension des particules par diffusion laser, dans la plage allant de 3 à 25 µm.

4. Processus selon l'une quelconque des revendications précédentes, **caractérisé en ce que** les particules de céramique sont dispersées dans une solution ou une émulsion du liant de résine dans un liquide.

5. Processus selon l'une quelconque des revendications précédentes, **caractérisé en ce que** la concentration des particules de céramique dans la composition de revêtement est comprise entre 1 et 20 % en poids.

6. Processus selon l'une quelconque des revendications précédentes, **caractérisé en ce que** le liant comprend au moins une résine choisie parmi les résines phénoliques, les résines époxy et les résines de silicone.

7. Processus selon l'une quelconque des revendications précédentes, **caractérisé en ce que** la composition de revêtement contient également un matériau lubrifiant solide choisi parmi une cire d'hydrocarbure solide, un fluoropolymère, un mélange de PTFE et de cire, du disulfure de molybdène, du graphite, du sulfure de zinc ou du phosphate de tricalcium ou n'importe quelle combinaison de deux ou plusieurs de ceux-ci.

8. Processus selon la revendication 7, **caractérisé en ce que** le matériau lubrifiant solide comprend une cire et/ou du polytétrafluoroéthylène.

9. Processus selon la revendication 8, **caractérisé en ce que** la composition de revêtement contient de 1 à 40 % en poids de cire solide et/ou de polytétrafluoroéthylène.

10. Processus selon l'une quelconque des revendications 1 à 6, **caractérisé en ce que** la composition de revêtement ne contient aucun matériau lubrifiant solide autre que les particules de céramique.

11. Processus selon l'une quelconque des revendications précédentes, **caractérisé en ce que** la surface qui est recouverte consiste en une surface métallique pré-recouverte d'un revêtement inhibiteur de corrosion.

12. Processus selon la revendication 11, **caractérisé en ce que** le revêtement inhibiteur de corrosion comprend des particules métalliques.

13. Processus selon la revendication 11 ou 12 destiné à recouvrir une surface métallique consistant à recouvrir la surface avec un revêtement inhibiteur de corrosion comprenant des particules d'aluminium et/ou des particules de zinc dans un liant de silicate ou de titanate organique, et à recouvrir selon un processus selon l'une quelconque des revendications 1 à 10.

14. Utilisation d'un revêtement comprenant des particules de céramique possédant une distribution bimodale de la dimension des particules, préparées à partir de nanoparticules d'Al₂O₃ agglomérées par cisaillement dans un malaxeur à fort cisaillement fonctionnant par exemple entre 6 000 et 15 000 rpm, dans laquelle de 15 à 75 % en volume des particules possèdent une dimension de particule, mesurée à l'aide d'un analyseur de distribution de la dimension des particules par diffusion laser, dans la plage allant de 10 à 250 nm et entre 25 et 80 % en volume des particules possède une dimension de particule comprise dans la plage allant de 3 à 25 µm, au moins 90 % en volume des particules de céramique possédant une dimension de particule dans les plages indiquées, dans un liant de résine pour réduire le frottement et l'usure d'une surface.
